# EUROPÄISCHE PATENTSCHRIFT

(11) **EP 1 251 253 B1**
(45) Veröffentlichungstag und Bekanntmachung des Hinweises auf die Patenterteilung: **07.01.2009**
(21) Anmeldenummer: 02007375.5
(22) Anmeldetag: 09.04.2002
(51) Int. Cl.: F02B 27/02, F02M 35/108

(54) **Schaltverband zum Verschluss von Saugkanälen einer Ansaugvorrichtung**
Valve system for shutting off suction passages of an intake system
Système de soupapes pour fermeture des conduits d'admission d'un système d'admission

(30) Priorität: 20.04.2001 DE 10119281
(43) Veröffentlichungstag der Anmeldung: 23.10.2002
(73) Patentinhaber: Mann + Hummel GmbH, 71638 Ludwigsburg (DE)
(72) Erfinder: Koch, Ingo, 71634 Ludwigsburg (DE); Pietrowski, Herbert, 74385 Pledelsheim (DE); Steiner, Günter, 71549 Auenwald (DE)
(74) Vertreter: Voth, Gerhard

(56) Entgegenhaltungen:
- EP-A- 0 725 210
- EP-A- 1 085 197
- DE-A- 19 800 207
- FR-A- 2 743 111

## Beschreibung

### Stand der Technik

Die Erfindung betrifft einen Schaltverband zum Verschluss von Saugkanälen einer Ansaugvorrichtung einer Brennkraftmaschine.

Schaltverbände der eingangs genannten Art sind aus den Stand der Technik bekannt. Zum Beispiel ist gemäß DE 197 35 133 A1 eine Kanalabschaltung für die Saugkanäle eines Ansaugsystems bekannt, die aus Schaltverbänden besteht, welche je zwei Klappen in einem gemeinsamen Klappenrahmen miteinander vereinen. Diese einzelnen Schaltverbände sind zu einer Verstelleinheit zusammengeschlossen, die durch ein gemeinsames Betätigungsmittel angetrieben wird.

Die Schaltklappen gemäß diesem Dokument liegen alle auf einer Achse. Als Fertigungsverfahren kommt das sogenannte Montagespritzgießen zum Einsatz, bei dem die Klappen direkt in den Rahmen eingespritzt werden, wodurch eine nicht demontierbares Funktionsbaugruppe entsteht. Dieses Fertigungsverfahren ist zum Beispiel in der EP 482 272 B1 genauer beschrieben. Im ersten Schritt wird der Klappenrahmen gespritzt wobei ein Durchgang für die Luft, der durch die Klappe verschlossen werden soll, durch einen entsprechenden Kern ausgespart wird. Im zweiten Schritt wird eben dieser Kern ein Stück auseinandergezogen, wodurch eine Kavität entsteht, in die die Klappe direkt eingespritzt werden kann. Dabei wird der Klappenrand nicht durch ein Formwerkzeug, sondern durch den Rahmen selbst gebildet, wodurch Toleranzen vollständig ausgeglichen werden können. Die Schwindung der eingespritzten Klappe bewirkt anschließend die freie Beweglichkeit derselben im Klappenrahmen. Daher dürfen die Werkstoffe des Rahmens und der Klappe nicht aneinander haften.

Die Schwindung der Klappe hat jedoch die Konsequenz, dass sich ein Längenversatz von mehreren Klappen, die mit einer gemeinsamen Welle montagespritzgegossen werden, addiert. Daher ist bei einem Aufbau gemäß DE 197 35 133 eine Aufteilung der gesamten Schaltvorrichtung in mehrere Schaltverbände zu je zwei Klappen notwendig.

Mehr als zwei Klappen können nicht in einem Stück montagespritzgegossen werden, da die Schwindung der Klappen zu Spannungen und einer erhöhten Reibung der Klappen in den verschiedenen Durchgangsöffnungen führen würde. Damit wäre die Funktion eines solchen Schaltverbandes ernstlich gefährdet.

Aus der DE 198 00 207 ist ein Saugmodul für eine Brennkraftmaschine bekannt, das mittels Klappen verschließbare zusätzliche Ansaugkanäle aufweist, diese Klappen sind über Kupplungsmittel miteinander und mit Betätigungsmitteln in Form eines Stellmotors verbunden. Zum Toleranzausgleich zwischen Klappen und Betätigungsmitteln ist ein elastischer Bereich in den Kupplungsmitteln vorgesehen, der vor allem das vollständige Schließen und Öffnen der Ansaugkanäle ermöglicht. Die Klappen sind als Einzelklappen in die Ansaugkanäle eingesteckt.

Aufgabe der Erfindung ist es daher, einen kostengünstig herstellbaren und einfach montierbaren Schaltverband zu schaffen, der gleichzeitig die Anforderungen an die Beweglichkeit der Verschlussorgane und die Abdichtung derselben gegenüber der zu verschließenden Durchgangsöffnung optimal erfüllt. Diese Aufgabe wird durch die Merkmale des Patentanspruches 1 gelöst.

### Vorteile der Erfindung

Der erfindungsgemäße Schaltverband weist in bekannter Weise einen Rahmen auf, in dem die Durchgänge vorgesehen sind, welche mit den Saugkanälen der Ansaugvorrichtung kommunizieren. Damit werden diese durch die Ansaugluft durchflossen. Ein Verschluss dieser Durchgänge durch entsprechende Verschlussorgane führt somit zu einem Verschluss der Saugkanäle.

Die Durchgänge können auf verschiedene Weise nebeneinander im Rahmen angeordnet sein. Denkbar ist eine Anordnung in einer Reihe, jedoch kann auch eine versetzte Anordnung erfolgen. Dies ist insbesondere dann sinnvoll, wenn nur ein Teil der Durchgänge durch Verschlussorgane verschließbar ausgeführt sein sollen.

Die Verschlussorgane sind unter Verwendung von Teilflächen des Rahmens als Formwandungen und zusätzlich weiteren Formteilen in Urformtechnik hergestellt. Hiermit ist insbesondere das Montagespritzgießverfahren gemeint, bei dem die Verschlussorgane aus Kunststoff hergestellt werden können. Die Verschlussorgane werden dabei in eine Kavität hineingespritzt, welche sich durch die Formteile und eben jene Teilflächen des Rahmens ergibt, mit denen die Verschlussorgane im Eingriff stehen sollen. Hierbei bieten sich insbesondere die Sitzflächen des Verschlussorgans an, welche zumindest bei geschlossenem Verschlussorgan mit den die Durchgänge bildenden Rahmenteilen im dichtenden Eingriff stehen müssen. Weiterhin sind die Lagerwellen der Verschlussorgane, die zu einer Verdrehung derselben notwendig sind, einteilig mit den Verschlussorganen hergestellt, wodurch sich Lagerflächen im Rahmen für die Lagerwellen bilden. Allerdings muss die Lagerwelle nicht direkt im Rahmen gelagert sein. Es können auch zusätzliche Gleitringe oder dergleichen zur Anwendung kommen.

Der erfindungsgemäße Schaltverband ist dadurch gekennzeichnet, dass jede der mit den Verschlussorganen einteilig hergestellten Lagerwellen eine eigene Drehachse aufweist. Die einzelnen Lagerwellen können demnach durch ein gemeinsames Betätigungsmittel angesteuert werden, um deren Drehung zu ermöglichen. Der wesentliche Vorteil der erfindungsgemäßen Ausgestaltung ist jedoch, dass alle Verschlussorgane in einen einzigen Rahmen eingespritzt werden können, da deren Toleranzen aufgrund der Schwindungen nicht durch eine gemeinsame Welle voneinander abhängen. Hierdurch ergibt sich ein sehr kostengünstig zu fertigendes Bauteil, wobei auch hohe Toleranzanforderungen erfüllt werden können. Dadurch ist gleichzeitig die Funktion des erfindungsgemäßen Schaltverbandes sichergestellt.

Der Schaltverband ergibt sich somit aus dem Rahmen und den zugehörigen Verschlussorganen, die in diesen eingespritzt sind.

Gegenüber einer gemeinsamen Drehachse gemäß dem Stand der Technik hat die beschriebene Bauform auch den Vorteil, dass eine Addition der Toleranzen aufgrund eines Winkelversatzes der Klappen auf einer gemeinsamen Drehachse vollständig vermieden wird. Hierdurch sind insbesondere die Leckageanforderungen die Verschlussorgane besser einzuhalten, da diese für jede Klappe einzeln eingestellt werden können. Eine Addition der Toleranzen ist ausgeschlossen. Dadurch kann auch auf einen bewusst vorgesehenen Winkelversatz zwischen den einzelnen Verschlussorganen auf der gemeinsamen Drehachse verzichtet werden, welcher über eine zunehmende Torrsion der gemeinsamen Verstellwelle zu einem zuverlässigen Verschliessen aller Klappen führen soll. Dieser bewirkt enorm hohe Stellkräfte, die bei der erfindungsgemäßen Ausführung vermieden werden können.

Die Erfindung sieht vor, dass es sich bei den Verschlussorganen um Schaltklappen handelt. Diese sind bevorzugt mit einer zentralen Lagerwelle als Drehachse und schmetterlingsartig daran befestigten Klappenflügeln ausgeführt. An einer Schaltklappe der beschriebenen Art gleichen sich die an der Klappe angreifenden Kräfte aufgrund der Luftströmung in der Ansaugvorrichtung aus, wodurch diese mit geringen Stellkräften betätigt werden kann.

Die beschriebene Ausrichtung hat den Vorteil, dass die einzelnen Klappen besonders einfach durch eine entsprechende Stellvorrichtung, zum Beispiel eine Verstellstange, angesteuert werden können. Außerdem läßt sich der Abstand zwischen den benachbarten Verschlussorganen damit minimieren, wodurch der Schaltverband auch auf engstem Raum untergebracht werden kann.

Diese und weitere Merkmale von bevorzugten Weiterbildungen der Erfindung gehen außer aus den Ansprüchen auch aus der Beschreibung und der Zeichnung hervor.

### Zeichnung

Es zeigen
- Figur 1: einen Schaltverband mit in einem einzigen Rahmen eingespritzten Drehschiebern in teilweise aufgebrochener Seitenansicht,
- Figur 2: einen Schaltverband entsprechend Figur 1, wobei die Drehschieber in Einzelrahmen montagespritzgegossen sind, in teilweise aufgebrochener Seitenansicht,
- Figur 3: die Aufsicht auf den Schaltverband gemäß Figur 2,
- Figur 4: den Schnitt durch den Teil eines Schaltverbandes, in den ein Schaltklappenmodul mit Einzelrahmen eingebracht ist,
- Figur 5: die Aufsicht auf den erfindungsgemäßen Schaltverband mit direkt eingespritzten Schaltklappen und Betätigungsgestänge,
- Figur 6: den Einbau des erfindungsgemäßen Schaltverbandes in der Bauart gemäß Figur 5 in die Saugkanäle eines Saugrohres vor dem Zylinderkopfflansch.

### Beschreibung der Ausführungsbeispiele

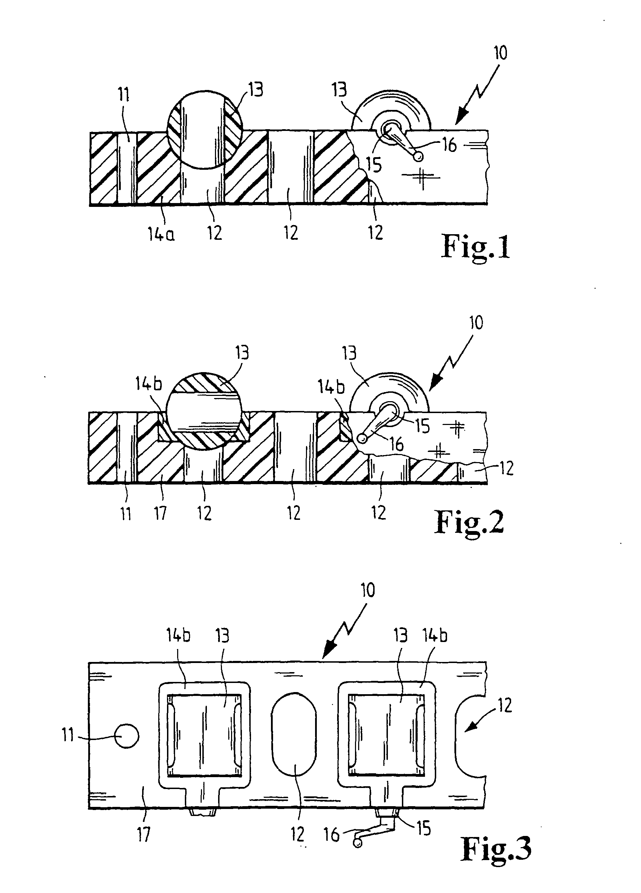

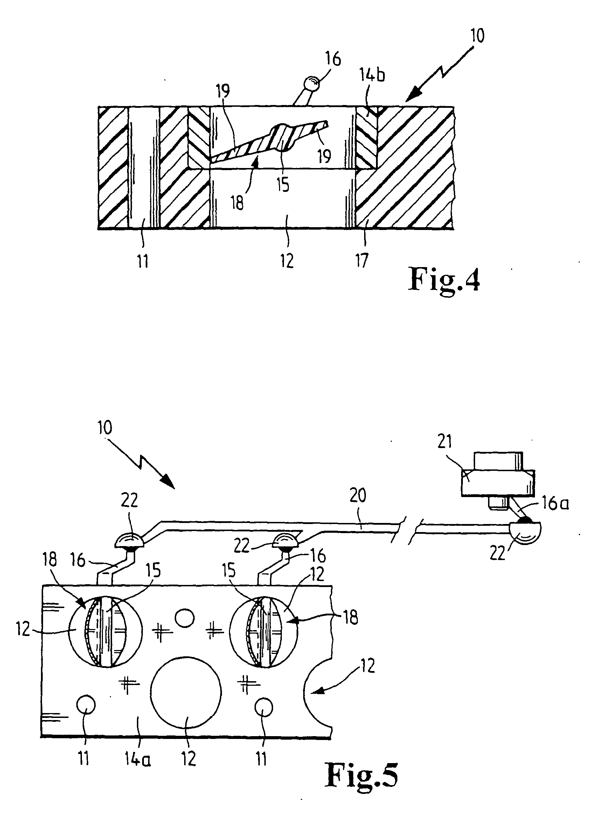

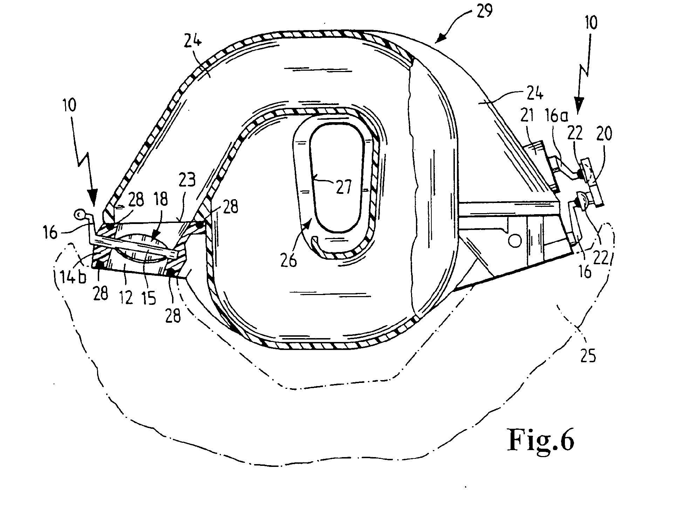

Die Figuren 1 bis 4 zeigen Schaltverbände der bekannten Art zum besseren Verständnis der Ausführungsbeispiele der Erfindung in den Figuren 5 und 6.

In Figur 1 ist ein Schaltverband 10 dargestellt. Dieser könnte zum Beispiel als Zwischenflansch über Montagebohrungen 11 zwischen dem Zylinderkopf einer Brennkraftmaschine (nicht dargestellt) und dem Zylinderkopfflansch eines Saugrohres (ebenfalls nicht dargestellt) eingebaut werden. Der Schaltverband weist Durchgänge 12 auf, welche mit den nicht dargestellten Saugkanälen der Ansaugvorrichtung kommunizieren. Dabei liegen geschaltete und nicht geschaltete Durchgänge vor.

In den geschalteten Durchgängen sind Drehschieber 13 angeordnet. Diese sind in einen Rahmen 14a, der mit ihnen zusammen den Schaltverband 10 bildet, eingespritzt. Im aufgebrochenen Teil ist zu erkennen, dass die Drehschieber in geöffneter Position dargestellt sind. Zu erkennen ist weiterhin, eine Lagerwelle 15, die den Rahmen 14a durchdringt und mit einer Kurbel zur mechanischen Ansteuerung des zugehörigen Drehschiebers 13 versehen ist.

In den weiteren Figuren sind entsprechende Bauteile mit den gleichen Bezugsziffern versehen und werden nicht noch einmal näher beschrieben.

Gemäß Figur 2 ist eine Variante des Schaltverbandes gemäß Figur 1 dargestellt. Diese Variante unterscheidet sich darin, dass die Drehschieber 13 jeweils in gesonderte Rahmen 14b eingespritzt sind. Damit ergeben sich einzelne Baueinheiten, welche in ein Trägerbauteil 17 eingesetzt werden können. Das Trägerbauteil gemäß Figur 2 erfüllt damit den selben Zweck beim Einbau in ein nicht dargestelltes Saugrohr, wie der Rahmen 14a gemäß Figur 1. Die Drehschieber sind in diesem Fall in geschlossenem Zustand dargestellt.

In Figur 3 lässt sich die Kontur der Rahmen 14b genauer erkennen. Diese umgeben die Drehschieber 13 ringförmig, wodurch der Verband zwischen Rahmen 14b und Drehschieber 13 entsprechend der dargelegten Vorteile des Montagespritzgießens gezielt gegeneinander abgedichtet werden können. Da der Drehschieber in geschlossener Stellung dargestellt ist, sind die Durchgänge, welche unterhalb der Drehschieber angeordnet sind nicht zu erkennen.

Der Schaltverband gemäß Figur 4 entspricht im Aufbau dem gemäß Figur 2, wobei jedoch anstelle des Drehschiebers 13 gemäß Figur 2 eine Schaltklappe 18 zum Einsatz kommt. Zu erkennen ist im Schnitt die Lagerwelle 15 der Schaltklappe und die von dieser abgehenden Klappenflügel 19. Wie im Zusammenhang mit Figur 2 dargelegt, ist die Schaltklappe 18 in den Rahmen 14b montagegespritzt. Der Rahmen ist in das Trägerbauteil 17 eingesetzt. Hierbei kann zum Beispiel eine Presspassung realisiert sein, welche eine zuverlässige Halterung des Rahmens 14b im Trägerbauteil 17 gewährleistet.

Ein Unterschied zu Figur 2 ergibt sich in der Gestaltung der Klappe. Diese ist vorrangig zur Erzeugung von Wirbeln in der Strömung der Ansaugluft vorgesehen. Daher verschließt sie im geschlossenen Zustand den Querschnitt des Saugkanals nicht vollständig.

Gemäß Figur 5 ist ein Schaltverband mit versetzt angeordneten Durchgängen 12 dargestellt. Eine Reihe der Durchgänge ist mit Schaltklappen 18 versehen. Diese sind direkt in den Rahmen 14a eingespritzt. Weiterhin ist in Figur 5 eine Betätigungsvorrichtung, bestehend aus einer Schubstange 20 und einem Antrieb 21, zu erkennen. Die Schubstange greift über Kugelgelenke 22 an den Kurbeln 16 der Schaltklappen 18 an wobei über eine Kurbel 16a die Kraft des Antriebs auf die Schubstange übertragen wird.

In Figur 6 ist der Einbau eines Schaltverbandes in ein Saugrohr dargestellt. Der Schaltverband ist an zylinderkopfseitige Auslässe 23 angeschlossen, die Saugkanäle 24 mit dem schematisch dargestellten Zylinderkopf 25 einer Brennkraftmaschine verbinden. Das Saugrohr besteht aus einem Sammelraum 26, von dem die Saugkanäle 24 wechselseitig abzweigen und diesen schneckenförmig umlaufen. Daher ist das Saugrohr für eine Brennkraftmaschine mit V-Anordnung der Zylinder geeignet.

Auf der nicht geschnitten dargestellten Seite des Saugrohres ist weiterhin die Betätigungsvorrichtung zu erkennen, die aus den Bauteilen entsprechend Figur 5, den Kurbeln 16, den Kugelgelenken 22, der Schubstange 20 und dem Antrieb 21 besteht. Der Antrieb kann zum Beispiel durch einen Elektromotor realisiert sein. Eine andere Möglichkeit ist die Anbringung einer Unterdruckdose, die zum Beispiel durch den Saugrohrunterdruck geschaltet werden kann. Zuletzt ist im Sammelraum ein Einlaß 27 für die Verbrennungsluft zu erkennen. Durch diesen gelangt die durch den Luftfilter des Ansaugtraktes gereinigte Ansaugluft, um über den Sammelraum 26 verteilt zu werden. Der Schaltverband ist mit Dichtungen 28 versehen um eine Abdichtung gegenüber dem Saugrohr 29 und dem Zylinderkopf 25 zu gewährleisten.

Zur Montage an den Saugrohren gemäß Figur 6 werden die Schaltverbände 10 vormontiert. Die Endmontage am Saugrohr kann also durch einen einfachen Handhabungsschritt erfolgen, wodurch die besonders sensiblen Kosten in der Endmontage klein gehalten werden können.

## Patentansprüche

1. Schaltverband (10) zum Verschluss von Saugkanälen (24,) einer Ansaugvorrichtung einer Brennkraftmaschine der mehreren Verschlussorganen (13, 16) aufweist die in durch Rahmen (14a) für die Verschlussorgane gebildeten Durchgängen (12) angeordnet sind, wobei die Verschlussorgane unter Verwendung von Teilflächen der jeweiligen Rahmen (14a), insbesondere der Durchgänge, als Formwandungen und zusätzlichen weiteren Formteilen im Montagesprïtzgießverfahren derart hergestellt sind, dass die Verschlussorgane in eine Kavität hineingespritzt werden, weiche sich durch die Formteile und jene Teilflächen des Rahmens ergibt, mit denen die Verschlussorgane in Eingriff bringbar sind und wobei die Lagerwellen der Verschlussorgane, die zu einer Verdrehung der selben notwendig sind, einteilig mit den Verschlussorganen hergestellt sind, wodurch sich Lagerflächen im Rahmen für die Lagerwellen bilden, wobei jede Lagerwelle (15) eigene Drehachse aufweist, wobei eine Betätigungsvorrichtung, bestehend aus einer Schubstange (20) und einem Antrieb (21), für die Verschlussorgane (13, 16) vorgesehen ist, wobei der Schaltverband an zylinderkopfseitige Auslässe (23) der Brennkraftmaschine zur Verbindung der Saugkanäle (24) mit einem Zylinderkopf (25) der Brennkraftmaschine anschließbar ist, wobei der Schaltverband mit Dichtungen (28) versehen ist, um eine Abdichtung gegenüber einem Saugrohr (29) und dem Zylinderkopf (25) zu gewährleisten, wobei die Verschlussorgane aus Schaltklappen bestehen, wobei die Durchgänge (12) V-forming versetzt derart angeordnet sind, dass sie zwei zueinander parallele Reihen bilden und wobei nur die Durchgänge einer Reihe mit den Schaltklappen (18) versehen ist.

## Claims

1. Switch assembly (10) for closing vacuum channels (24) of an intake manifold device of an internal combustion engine, featuring several shut-off members (13, 16) which are arranged in passages (12) formed by frames (14a) for the shut-off members, wherein the shut-off members are manufactured as mould walls and additional moulded parts using partial areas of the respective frames (14a), especially of the passages, by in-mould assembly in such a way that the shut-off members are injected into a cavity which is created by the moulded parts and those partial areas of the frame with which the shut-off members can be engaged and wherein the bearing shafts of the shut-off members which are necessary for their rotation are manufactured in one piece with the shut-off members, whereby bearing surfaces are formed in the frame for the bearing shafts, wherein each bearing shaft (15) features a separate rotating axis, wherein a control mechanism consisting of a connecting rod (20) and a drive (21) is provided for the shut-off members (13, 16), wherein the switch assembly can be connected to outlets (23) at the side of the cylinder head of the internal combustion engine for connecting the vacuum channels (24) with a cylinder head (25) of the internal combustion engine, wherein the switch assembly is provided with seals (28) in order to ensure a sealing of an intake manifold (29) and the cylinder head (25), wherein the shut-off members consist of switching flaps, wherein the passages (12) are staggered in a V-shaped manner in such a way that they form two rows parallel to each other and wherein only the passages of one row are provided with the switching flaps (18).

## Revendications

1. Groupe de commande (10) pour fermer des canaux d'admission (24, a, b) d'un dispositif d'admission d'un moteur à combustion interne qui présentent plusieurs organes de fermeture (13, 16) disposés dans des passages (12) formés par des châssis (14a) dans lequel,
les organes de fermeture sont réalisés en utilisant des surfaces partielles des châssis (14a) respectifs, en particulier des passages, en tant que parois de moule, et d'autres pièces moulées supplémentaires dans le procédé moulage par injection, de manière à ce que les organes de fermeture soient injectés dans une cavité que l'on obtient à travers les pièces moulées et les surfaces partielles du châssis avec lesquelles les organes de fermeture peuvent s'engager,
les arbres d'appui des organes de fermeture, nécessaires à une rotation de ceux-ci, sont d'un seul tenant avec les organes de fermeture, moyennant quoi des surfaces d'appui se forment dans le châssis pour les arbres d'appui,
chaque arbre d'appui (15) présente son propre axe de rotation,
un dispositif, constitué d'une bielle (20) et d'un entraînement (21) actionne les organes de fermeture (13, 16),
le groupe de commande se raccorde à des sorties (23) côté culasse de cylindre du moteur à combustion interne pour relier les canaux d'admission (24) à une culasse de cylindre (25) du moteur à combustion interne,
le groupe de commande, muni de joints (28), garantit une étanchéité par rapport à un tube d'admission (29) et à la culasse de cylindre (25),
les organes de fermeture sont des volets de commande,
les passages (12) sont disposés décalés en V de manière à former des rangées parallèles entre elles et seuls les passages d'une rangée sont pourvus de volets de commande (18).
